# FASCICULE DE BREVET EUROPEEN

(11) **EP 1 269 036 B1**
(45) Date de publication et mention de la délivrance du brevet: **08.06.2005**
(21) Numéro de dépôt: 01919530.4
(22) Date de dépôt: 20.03.2001
(51) Int. Cl.: F16D 65/095

(54) **ETRIER DE FREIN COMPRENANT AU MOINS DEUX PISTONS OPPOSES**
BREMSSATTEL MIT MINDESTENS ZWEI SICH GEGENÜBERLIEGENDEN KOLBEN
BRAKE CALLIPER COMPRISING AT LEAST TWO OPPOSITE PISTONS

(30) Priorité: 03.04.2000 FR 0004531
(43) Date de publication de la demande: 02.01.2003
(73) Titulaire: SA Beringer, 42940 Chatelneuf (FR)
(72) Inventeur: BERINGER, Gilbert, F-42940 Chatelneuf (FR)
(74) Mandataire: Thivillier, Patrick
(86) Numéro de dépôt international: PCT/FR2001/000823
(87) Numéro de publication internationale: WO 2001/075323

(56) Documents cités:
- FR-A- 2 764 658
- GB-A- 934 172
- GB-A- 998 612
- US-A- 4 401 194

## Description

L'invention se rattache au secteur technique des dispositifs de freinage pour tous types de véhicules, tels que voitures, motocyclettes, avions, et concerne plus particulièrement les étriers de freins.

Les étriers de freins constituent l'un des éléments importants du dispositif de freinage. Pour l'essentiel, d'une manière connue, un étrier de frein comprend des pistons montés dans un carter présentant des agencements pour le montage dans deux plans parallèles de deux plaquettes assujetties aux pistons pour agir sur au moins un disque que présente la roue du véhicule considérée. Les pistons sont reliés hydrauliquement à un maître cylindre pour être commandés par un ou des organes actionneurs manoeuvrables à la main ou au pied en fonction du type de véhicule considéré.

Plus particulièrement l'invention concerne un étrier de frein comprenant au moins deux pistons opposés montés dans un carter du type monobloc ou en deux parties.

L'action de freinage a pour but de créer une décélération du véhicule suivie ou non de l'arrêt total de ce dernier. Cette action de freinage est essentiellement définie par la pression envoyée dans l'étrier de frein par le maître cylindre. Il en résulte une réaction qui correspond à la valeur de la décélération susceptible d'être ressentie de différentes manières par le conducteur. De fait, la valeur de la décélération est très difficile à apprécier.

Par exemple, cette valeur de la décélération peut être perçue directement par une sensation du phénomène d'accélération horizontale dans le corps de l'utilisateur (c'est la cas notamment d'une moto), ou directement en intégrant la diminution de la vitesse perçue par le défilement du paysage. Cette valeur de la décélération peut également être perçue indirectement en appréciant la variation d'assiette des véhicules résultant de la composante horizontale de l'accélération, le véhicule ayant tendance à pencher de l'avant. Cette réaction est la plus utilisée pour le dosage des freins, mais se trouve entachée d'erreurs. En effet, à décélération égale, la plongée du véhicule varie en fonction de son chargement, du réglage de la suspension et d'autres phénomènes.

Pour obtenir la décélération recherchée, le conducteur agit sur l'organe de freinage provoquant une réaction de son véhicule. En fonction de cette réaction, le conducteur est obligé de modifier plusieurs fois l'action exercée sur l'organe de freinage pour obtenir la décélération souhaitée. Le résultat obtenu n'est donc pas immédiat. Ce temps de réponse est donc susceptible de faire perdre de nombreux mètres sur une distance d'arrêt.

Lorsque le conducteur est suffisamment expérimenté, sous réserve de bien connaître son véhicule, ce dernier peut, par apprentissage, déterminer l'effort précis qu'il convient d'appliquer sur l'organe actionneur pour obtenir la décélération souhaitée. Dans ce cas, le résultat est instantané mais la chaîne de commande doit être fidèle. A défaut, le résultat ne sera pas celui escompté par le conducteur.

Le conducteur est donc obligé d'apprendre à utiliser son système de freinage ou à déterminer expérimentalement la course et l'effort nécessaires sur l'organe actionneur de freinage, pour obtenir la décélération souhaitée. Cet apprentissage se fait naturellement et inconsciemment. L'apprentissage et le dosage de freinage sont possibles avec d'autant plus de précision que la fidélité du système est bonne. L'idéal est d'avoir une liaison pratiquement linéaire entre la pression hydraulique dans le circuit de freinage et la décélération.

D'importants progrès techniques dans le domaine du freinage ont été réalisés. Ainsi le passage de la commande à câbles à la commande hydraulique, puis du frein à tambour au frein à disque, a permis d'accroître la fiabilité du freinage. La puissance et l'endurance des freins ont été améliorées. De même, sont apparus de nombreux systèmes d'assistance au freinage, notamment pour éviter tout blocage intempestif des roues. Toutefois, aucun effort particulier n'a été fait pour améliorer la fidélité du système. Tout au contraire, la généralisation des freins assistés a dégradé la fiabilité en introduisant un temps de réponse à la variation de l'effort de l'organe actionneur pour une décélération égale.

Dans un étrier classique à pistons opposés, l'effort tangent des plaquettes est repris par le carter de l'étrier, protégé ou non par des plaquettes rapportées sur ledit carter. On renvoie aux figures 1 et 2 des dessins qui montrent respectivement par une vue de face et par une vue de dessus, un exemple de réalisation d'un étrier de frein selon l'état de la technique. Les plaquettes (P) sont montées de part et d'autre du disque (D) en étant supportées, au niveau de la partie supérieure, par un axe transversal (A) situé très sensiblement dans la partie médiane et engagé dans des agencements du carter de l'étrier. Les pistons opposés (P1) et (P2) assujettis aux plaquettes, sont montés dans des logements correspondants du carter. On renvoie plus particulièrement à la figure 3 des dessins.

Si l'on considère l'ensemble de l'étrier dans un plan transversal, les plaquettes sont à une distance (a) de la face interne correspondante du carter.

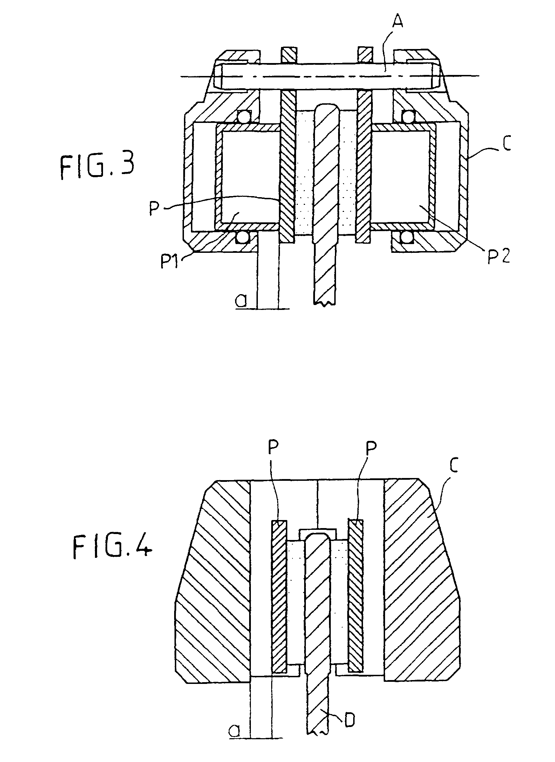

On renvoie aux figures 3 et 4 qui montrent l'étrier, selon deux coupes différentes, et considéré au repos, c'est-à-dire lorsqu'aucun effort de pression n'est exercé sur l'organe de freinage. Par contre, sous l'effet de la pression exercée, le carter de l'étrier a tendance à s'ouvrir d'une manière non négligeable dans cette zone (0.2 - 0.5 mm) créant un frottement entre la plaquette et le carter, ce qui a pour effet de contrecarrer l'effort normal des pistons.

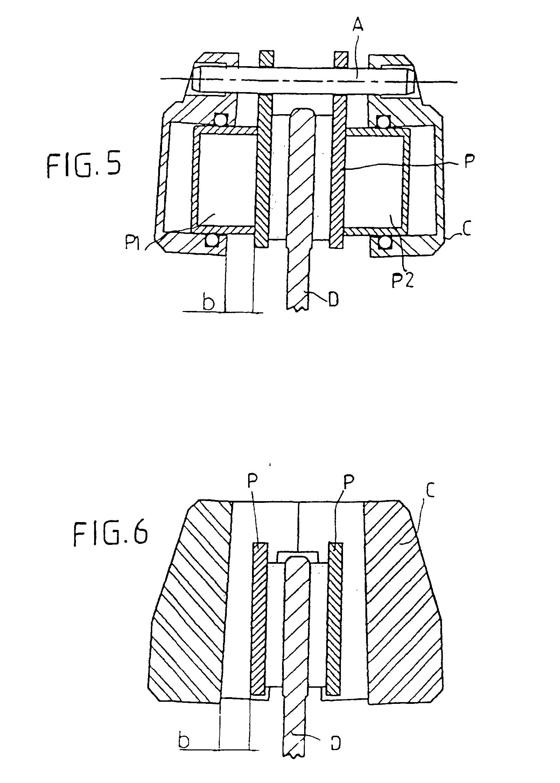

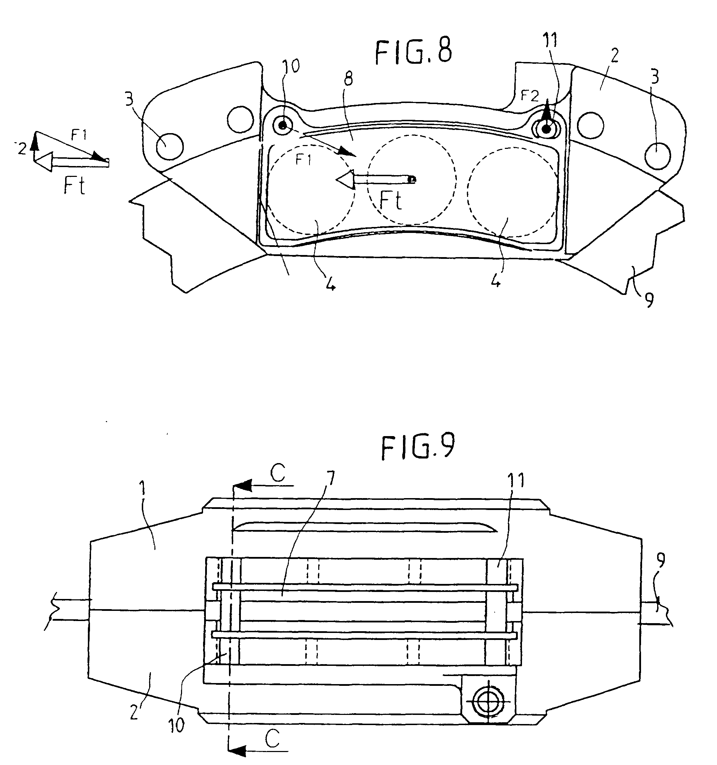

On renvoie aux figures 5 et 6 qui montrent l'influence de la déformation du carter par rapport aux plaquettes. Il convient de comparer la distance (a). Il en résulte qu'à la montée en pression, le frottement entre les plaquettes et le carter se soustrait à l'effort des pistons, de sorte qu'à la descente en pression, le frottement s'ajoute à celui des pistons. Ce phénomène provoque une courbe d'hystérésis induisant une perte de fidélité notable dans l'étrier.

On renvoie à la figure 7 qui montre une courbe d'hystérésis d'un étrier de frein classique à pistons opposés. En traits continus, est indiqué l'effort tangent mesuré, tandis qu'en traits interrompus est représenté l'effort tangent théorique. En abscisses, sont indiquées les pressions dans le circuit, la pression étant indiquée en bar, tandis qu'en ordonnées, sont indiqués les efforts tangents sur le disque en daN.

Cet état de la technique peut être illustré par l'enseignement du brevet GB 998 612 où les plaquettes de frein sont fixées dans une zone du carter où il y a des déformations.

Ce phénomène d'hystérésis résultant du frottement entre la plaquette et le carter, sous l'effort de pression exercée sur les pistons, a pour conséquence que le conducteur ne peut pas tester la décélération avec précision, et surtout diminuer, d'une manière sensible, les efforts tangents, sans relâcher, d'une manière importante, la pression pour diminuer cet effort. Ces problèmes obligent les pilotes de compétition à pomper sur l'organe actionneur de commande (levier ou pédale) pour tenter de se recaler toujours sur la courbe de montée en pression, de sorte que la courbe de descente en pression n'est jamais utilisée. Cette technique dite de pompage qui consiste à exercer un effort sur le levier ou la pédale de frein et à relâcher immédiatement cet effort, de manière successive et continue, n'est pas accessible au conducteur de base qui peut se trouver surpris par une décélération sans cesse différente pour le même effort appliqué sur le levier ou la pédale de frein.

Il s'avère donc difficile de ressentir et de doser correctement le freinage. Cette non maîtrise du freinage conduit inévitablement à des décélérations inadaptées pouvant avoir des conséquences dommageables, y compris lorsque le véhicule est équipé d'un système anti-blocage qui, comme indiqué, a tendance à augmenter les distances d'arrêt.

Le problème étant ainsi clairement posé, et afin de remédier aux inconvénients précités, il est apparu nécessaire de pouvoir éliminer ou à tout le moins diminuer d'une manière très importante, les frottements directs ou indirects entre la partie du carter qui se déplace sous la pression et les plaquettes.

Pour résoudre ce problème, il a été conçu et mis au point, un étrier de frein comprenant au moins deux pistons opposés montés dans un carter présentant des agencements pour le montage, dans deux plans parallèles, de deux plaquettes assujetties auxdits pistons pour agir sur au moins disque. Selon l'invention, les agencements de montage des plaquettes sont constitués par des moyens aptes à reprendre l'effort tangent desdites plaquettes de manière à éviter tout déplacement de ces dernières au moment du freinage, lesdits moyens étant disposés dans une ou des zones du carter où il n'y a pas déformation. Les moyens sont constitués par deux axes montés semi-libre dans le carter. Les axes sont montés transversalement dans des agencements que présentent les extrémités des plaquettes, au niveau de leur partie supérieure, lesdites plaquettes n'étant pas en contact avec le carter.

Compte tenu de ces dispositions, il en résulte que les plaquettes ne se déplacent pratiquement pas par rapport à leur zone de montage dans le carter de l'étrier qui s'ouvre sous l'effort de pression. Autrement dit, la déformation du carter de l'étrier ne génère pas de frottements au niveau des plaquettes qui ne se déplacent pratiquement pas par rapport aux axes de montage. L'hystérésis est négligeable étant donné que la compressibilité du disque et du matériau de friction des plaquettes est négligeable.

L'invention est exposée ci-après plus en détail à l'aide des figures des dessins annexés dans lesquels :

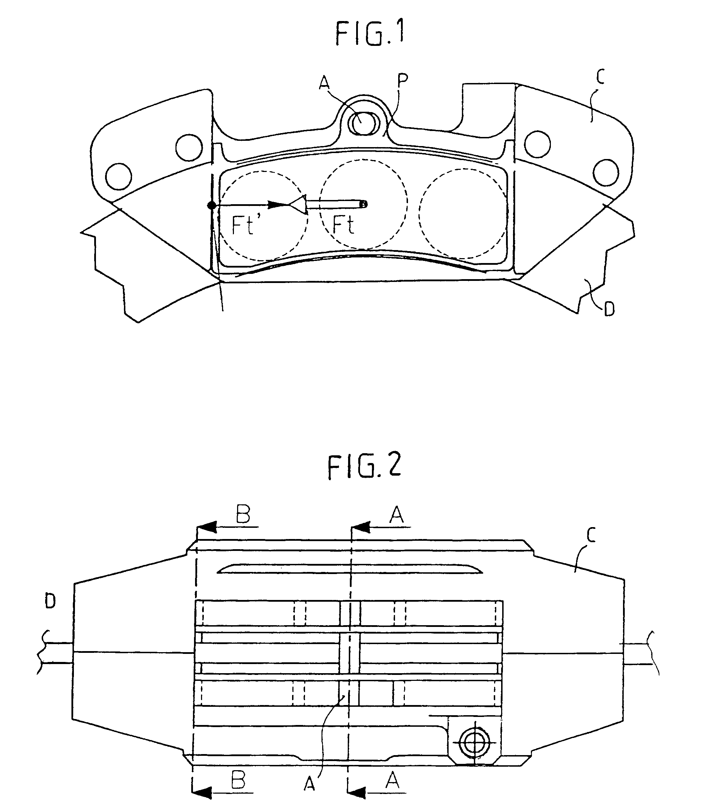

- la figure 1 est une vue de face à caractère schématique d'un étrier selon l'état de la technique ;
- la figure 2 est une vue de dessus correspondant à la figure 1 ;
- la figure 3 est une vue en coupe transversale considérée selon la ligne A-A de la figure 2 en position repos ;
- la figure 4 est une vue en coupe transversale considérée selon la ligne B-B de la figure 2 en position repos ;
- les figures 5 et 6 sont des vues en coupe transversale correspondant respectivement aux figures 3 et 4 et montrant l'ouverture du carter de l'étrier sous un effort de pression;
- la figure 7 montre la courbe d'hystérésis obtenue dans le cas d'un étrier de frein classique a pistons opposés ;
- la figure 8 est une vue semblable à la figure 1 montrant un étrier selon les caractéristiques de l'invention ;
- la figure 9 est une vue de dessus correspondant à la figure 8 ;

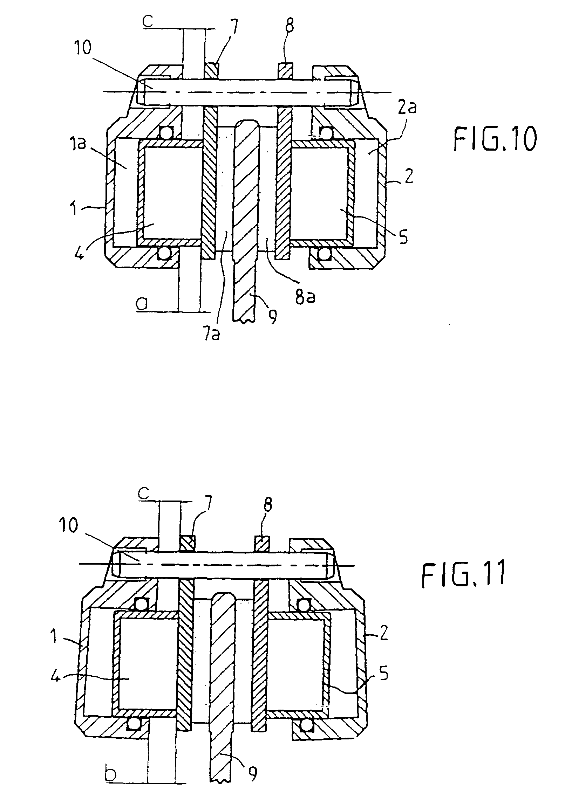

- la figure 10 est une vue en coupe transversale considérée selon la ligne C-C de la figure 9 en position repos ;
- la figure 11 est une vue correspondant à la figure 10 montrant le comportement des plaquettes sous l'effort de pression;

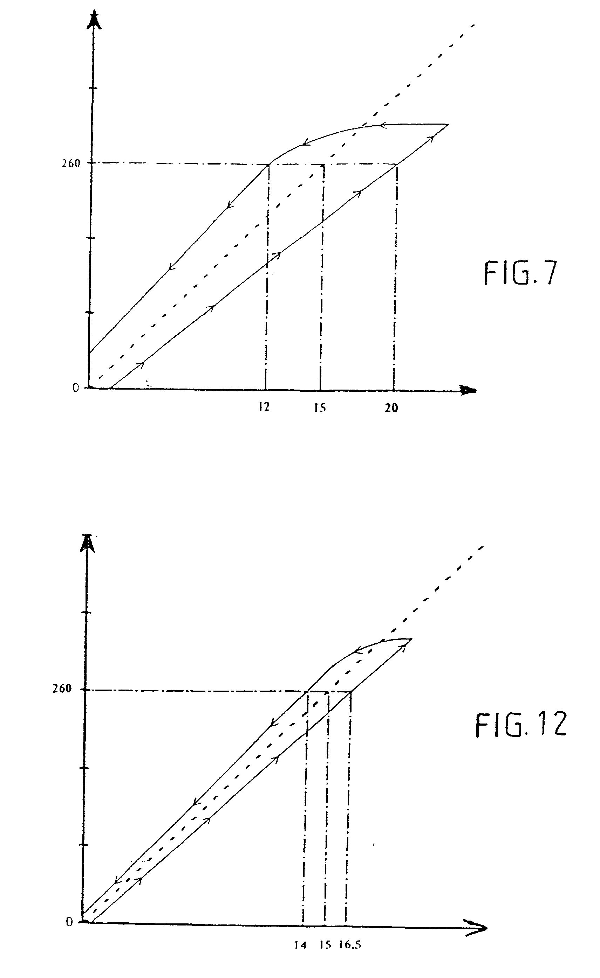

- la figure 12 montre la courbe d'hystérésis obtenue dans le cas d'un étrier de frein selon les caractéristiques de l'invention.

Dans l'exemple illustré, le carter de l'étrier est en deux parties distinctes (1) et (2) assemblées entre elles par tout moyen connu, par exemple au moyen de vis transversales (3). Bien évidemment, sans pour cela sortir du cadre de l'invention, une conception monobloc du carter n'est pas à exclure. Chacune des parties (1) et (2) du carter présente des agencements sous forme de chambrages (1a) (2a) notamment pour le montage, d'une manière étanche, d'au moins deux pistons opposés (4) et (5). L'ensemble de l'étrier présente tout type d'agencements pour être relié au circuit hydraulique du maître cylindre notamment. Ces dispositions ne sont pas décrites en détail, car parfaitement connues pour un homme du métier et susceptibles de faire l'objet de nombreuses formes de réalisations.

De même, d'une manière connue, les parties (1) et (2) du carter présentent, sensiblement au niveau de leur partie médiane, une zone évidée pour le logement des plaquettes de frein (7) et (8), et dont les garnitures de freinage (7a) et (8a) sont disposées de part et d'autre et en regard de chacune des faces d'un disque (9).

Pour résoudre le problème posé d'éliminer les frottements entre la partie du carter qui se déplace sous la pression et les plaquettes, l'effort tangent (Ft) des plaquettes, est repris par deux axes (10) et (11) montés à chacune des extrémités desdites plaquettes pour être engagés et fixés avec capacité de déplacement limité dans des agencements des parties (1) et (2) du carter. Par exemple, chacune des extrémités des plaquettes (7) et (8) présente, au niveau de leur partie supérieure, une proéminence pour l'engagement des axes de fixation (10) et (11).

Selon ces caractéristiques, il apparaît que les axes de fixation (10) et (11) aptes à assurer le maintien des plaquettes, sont disposés dans des agencements du carter situés à proximité d'une zone massive dudit carter qui n'a pas tendance à se déformer sous l'effort de pression. On renvoie aux figures 8, 9 et 10.

Quand l'étrier se déforme sous l'effort de pression résultant du freinage, les plaquettes (7) et (8) ne se déplacent pratiquement pas par rapport aux deux axes (10) et (11) (figure 11), étant donné que ces derniers sont disposés dans une zone du carter où il n'y a pas de déformation. L'effort tangent des plaquettes est donc repris par les deux axes. Il n'y a donc pas de frottement et donc pas d'hystérésis étant donné que la compressibilité du disque et du matériau de friction des plaquettes est négligeable. Si l'on compare les figures 10 et 11, on voit que la distance (C), entre la position repos et la position de mise en pression de l'étrier, demeure constante.

Il en résulte que l'erreur de dosage est diminuée de manière substantielle, comme il ressort de la figure 12 qui montre l'effort tangent théorique représenté en traits interrompus par rapport à l'effort tangent mesuré représenté en traits pleins. L'hystérésis est fortement diminué. De la même façon que pour la figure 7 relative à la courbe d'hystérésis d'un étrier de frein classique, en abscisses sont représentées en bar les pressions dans le circuit et, en ordonnées, l'effort tangent sur le disque en daN.

Les avantages ressortent bien de la description. En particulier, on souligne et on rappelle la possibilité de ressentir et de doser correctement le freinage en observant, d'une manière surprenante et inattendue, une amélioration du système d'anti-blocage des roues lorsque le véhicule en est équipé.

## Revendications

1. Etrier de frein comprenant au moins deux pistons opposés (4) et (5) montés dans un carter (1 - 2) présentant des agencements pour le montage, dans deux plans parallèles, de deux plaquettes (7) et (8) assujetties auxdits pistons pour agir sur au moins un disque (9), **caractérisé en ce que** :
- les agencements de montage des plaquettes (7) et (8) sont constitués par deux axes (10) et (11) aptes à reprendre l'effort tangent desdites plaquettes de manière à éviter tout déplacement de ces dernières au moment du freinage ;
- les axes (10) et (11) sont montés transversalement dans des agencements que présentent les extrémités des plaquettes, au niveau de leur partie supérieure, lesdites plaquettes (7) et (8) n'étant pas en contact avec le carter (1-2) ;
- les axes (10) et (11) sont disposés dans une ou des zones du carter (1-2) où il n'y a pas de déformation.

## Patentansprüche

1. Bremssattel mit mindestens zwei einander gegenüberliegenden Kolben (4) und (5), die in einem Gehäuse (1-2) angeordnet sind, welches in zwei parallelen Ebenen Vorrichtungen zum Befestigen von zwei Scheiben (7) und (8) aufweist, die an den Kolben befestigt sind und auf mindestens eine Scheibe (9) einwirken, **dadurch gekennzeichnet, dass** die Vorrichtungen zum Befestigen der Scheiben (7) und (8) durch zwei Achsen (10) und (11) gebildet sind, welche geeignet sind, die Tangentialkraft der beiden Scheiben so aufzunehmen, dass eine Verschiebung der beiden Scheiben beim Abbremsen vermieden wird, dass die Achsen (10) und (11) in den Vorrichtungen quer befestigt sind, welche die Endabschnitte der Scheiben bilden und im Bereich ihres höchsten Abschnittes vorgesehen sind, wobei die Scheiben (7) und (8) nicht mit dem Gehäuse (1-2) in Verbindung sind, und dass sich die Achsen (10) und (11) in einem oder mehreren Zonen des Gehäuses (1-2) befinden, in dem keine Verformung stattfindet.

## Claims

1. Brake caliper comprising at least two opposed pistons (4) and (5) mounted in a casing (1-2) having arrangements for mounting, in two parallel planes, two pads (7) and (8) fixed to the said pistons so as to act on at least one disc (9), **characterized in that**:
- the arrangements for mounting the pads (7) and (8) consist of two pins (10) and (11) which are able to take up the tangent force of the said pads in such a way as to prevent any movement of these pads at the time of braking;
- the pins (10) and (11) are mounted transversely in arrangements belonging to the ends of the pads, at the upper part thereof, the said pads (7) and (8) not being in contact with the casing (1-2);
- the pins (10) and (11) are arranged in one or more regions of the casing (1-2) where there is no deformation.
